# EUROPÄISCHE PATENTSCHRIFT

(11) **EP 1 693 393 B1**
(45) Veröffentlichungstag und Bekanntmachung des Hinweises auf die Patenterteilung: **14.10.2009**
(21) Anmeldenummer: 06002627.5
(22) Anmeldetag: 09.02.2006
(51) Int. Cl.: C08G 12/40, C14C 3/20, C08G 8/16, C08G 8/28, D21H 17/49, D21H 17/51, D06M 15/429

(54) **Säuregruppenhaltige Kondensationsprodukte**
Condensation products containing acid groups
Produits de condensation contenant des groupes acides

(30) Priorität: 22.02.2005 DE 102005008034
(43) Veröffentlichungstag der Anmeldung: 23.08.2006
(73) Patentinhaber: LANXESS Deutschland GmbH, 51369 Leverkusen (DE)
(72) Erfinder: Brinkmann, Nils, Dr., 51373 Leverkusen (DE); Kleban, Martin, Dr., 51381 Leverkusen (DE); Lammich, Karl-Heinz,Dr., 51061 Leverkusen (DE)

(56) Entgegenhaltungen:
- EP-A- 0 063 319
- EP-A- 0 265 657
- GB-A- 595 366
- GB-A- 2 070 632
- US-A1- 2004 074 009

## Beschreibung

Die Erfindung betrifft Säuregruppen-haltige Aldehyd-Kondensate und deren Salze, Verfahren zu deren Herstellung, ihre Verwendung als Lederhilfsmittel, insbesondere als Gerb- und Nachgerbstoffe, sowie die damit gegerbten und nachgegerbten Leder und Pelze.

Die Herstellung von Leder und Pelzen aus Häuten und Fellen verläuft in der Regel in mehreren Schritten. Nach den vorbereitenden Schritten der Wasserwerkstatt, wie Enthaaren, Entfleischen, Entkälken und Beizen besteht eine typische Abfolge aus Gerbung, Nachgerbung, Färbung, Fettung und Zurichtung. Die einzelnen Arbeitsschritte lassen sich dabei noch in weitere Untereinheiten aufteilen.

Während die Gerbung zu einer Erhöhung der Schrumpftemperatur des Leders führt, hat die Nachgerbung darauf kaum Einfluss. Unter Nachgerbung versteht man die Nachbehandlung von vorgegerbtem, oft chromgegerbtem Leder, um Farbe, Egalität, Weichheit, Fülle sowie das Verhalten gegen Wasser (Hydrophobie) zu optimieren und Gerbstoffe zu fixieren. Besonders die Gerbung, Nachgerbung und Färbung werden dabei gewöhnlich in verschiedenen sogenannten Gerbfässem unter Verwendung wässriger Gerbstoff-/Nachgerbstoff-Lösungen oder -Dispersionen respektive Farbstoff lösungen durchgeführt.

Kondensationsprodukte als Nachgerbstoffe für Leder sind beispielsweise bereits in US-A-3063781, EP-A-63319, DE-A-19823155, US-A-4.656059, WO94/10231, GB-A-2371559 und DE-A-4436182 beschrieben.

GB-595366A beschreibt Kondensationsprodukte und deren Herstellung unter Verwendung von Aldhyden eines wasserlöslichen Metallsalzes der Schwefelsäure und einer oder mehrerer Amino-Komponenten aus der Gruppe Carbamid, Polyaminodiazin und Polyaminotriazin.

In den Beispielen finden Formaldehyd und Acetaldehyd Verwendung.

In GB2070632-A sind spezielle Gerb-Reagenzien zur Behandlung von Leder offenbart, wobei das Gerb-Reagenz ein Kondensationsprodukt eines aliphatischen Aldehyds mit 1 bis 4 Kohlenstoffatomen und einer oder mehreren Sulfonsäuren und/oder Carbonsäuren enthaltenden Aminosubstiuierten Verbindungen, die einen Benzolkern aufweisen, ist. Die Säuregruppen in den Kondensationsprodukten liegen am Benzolkern.

EP-A 063 319 beschreibt ein Verfahren zur Herstellung von wasserlöslichen Harzgerbstoffen aus Melamin, Harnstoff, Formaldehyd und Natriumhydrogensulfit als Nachgerbstoff für Leder.

Diese Kondensationsprodukte weisen aber noch Nachteile bei den damit nachgegerbten Ledern auf, insbesondere in der Fülle, Weichheit, Narbenwurf, Griff, Festnarbigkeit, Färbbarkeit.

Überraschenderweise besitzen die erfindungsgemäßen Kondensationsprodukte ein deutlich verbessertes Eigenschaftsbild, insbesondere ist eine verbesserte Weichheit, Fülle, Färbbarkeit, Festnarbigkeit und Griff festzustellen.

Gleichzeitig zeichnen sich die mit dem erfindungsgemäßen Kondensat behandelten Leder durch Formaldehydfreiheit nach DIN 53 315 aus. Ein Vorteil der ebenfalls als sehr positiv zu verbuchen ist.

Überraschenderweise wurden nun Säuregruppen-enthaltene Kondensationsprodukte auf Basis von
a) wenigstens einem Mono-Aldehyd aus der Gruppe bestehend aus Acrolein, Propionaldehyd, Isobutyraldehyd, Crotonaldehyd, Pentanaldehyd, Hexanaldehyd, Heptanaldehyd, und deren Isomeren, insbesondere Isobutyraldeyhyd.
   und
b) wenigstens einer NH₂-Gruppe tragende Verbindung,
wobei als Säuregruppe Sulfon- und/oder Carbonsäuregruppen sowie deren Salze verstanden werden, gefunden, wobei die Einführung von Sulfonsäuregruppen mit Hilfe von Reaktanden ausgewählt aus der Gruppe bestehend aus konzentrierte Schwefelsäure, Oleum, Chlorsulfonsäure, Alkali-, Erdalkali- oder Ammoniumdisulfit, Alkali-, Erdalkali- oder Ammoniumhydrogensulfit, Alkali-, Erdalkali- oder Ammoniumsulfamat und Mischungen davon erfolgt und die Einführung von Carbonsäuregruppen durch Oxidation von Alkylgruppen, Alkengruppen, Aldehydgruppen oder Alkoholgruppen, die Hydrolyse von Amiden, Estern oder Carbonsäurechloriden erfolgt

"Auf Basis von" bedeutet, dass das Kondensationsprodukt gegebenenfalls aus weiteren Reaktanden neben a), b) und gegebenenfalls c) und d) und Säuregruppen-einführenden Reaktanden hergestellt wird.

Die jeweiligen Gruppen a) und b) sind jedoch abschließend hinsichtlich der verwendeten Mono-Aldehyden bzw. NH₂-Gruppen tragenden Verbindungen. Das heißt kein anderes Mono-Aldehyd wird als Aufkomponente eingesetzt, soweit es nicht der Definition von a) genügt. Zur Klarstellung sei erwähnt, dass beispielsweise Formaldehyd - da C₁-Mono-Aldehyd - als Reaktand für die erfindungsgemäßen Kondensate nicht in Frage kommt. Bevorzugte erfindungsgemäße Kondensationsprodukte werden zu mehr als 95 Gew.-%, insbesondere zu mehr als 99 Gew.-% aus den Komponenten a), b), c), d) und Reaktanden zur Einführung der Säuregruppen aufgebaut.

Als NH₂-Gruppen enthaltene Verbindungen der Komponente b) kommen insbesondere primäre Amine sowie Amide in Frage. Bevorzugt sind dies aliphatische oder aromatische C₁-C₁₀-Amine und/oder -Amide. Besonders bevorzugt wird Cyanamid, Harnstoff, Melamin, Guanidin, Formoguanamin, Benzoguanamin, Acetoguanamin, Caprinoguanamin, Isobutyroguanamin, Acrylamid, Benzamid, Dicyandiamid (Cyanoguanidin) oder Mischungen daraus eingesetzt.

Bevorzugt wird Melamin in Kombination mit Harnstoff eingesetzt. Die erfindungsgemäßen Kondensationsprodukte tragen Sulfonsäure- und/oder Carbonsäuregruppen oder deren Salze.

Bevorzugte Salze sind Alkali-, Erdalkali- oder Ammoniumsalze, besonders bevorzugt in Form ihrer Natrium- oder Kalium-Salze.

Bevorzugte Säuregruppen sind Sulfonsäuregruppen und ihre Salze.

Bei der Einführung der Säuregruppen werden insbesondere die aus der Reaktion der Amine mit den Aldehyden generierten OH-Gruppen in Säuregruppen, insbesondere in Sulfonsäuregruppen umgewandelt.

Als weitere Aufbaukomponente des erfindungsgemäßen Kondensationsprodukts kommt beispielsweise als Komponente c) ein oder mehrere Di-Aldehyde in Frage. Vorzugsweise handelt es sich dabei um aliphatische oder aromatische C₂-C₁₂-Dialdehyde insbesondere um aliphatische C₂-C₇-Dialdehyde wie Glyoxal, Malonaldehyd, Butandial, Pentandial, insbesondere Glutardialdeyd, Hexandial und Heptandial, sowie deren sämtliche Isomere, sowie Gemische davon. Besonders bevorzugt ist Glutardialdeyd.

Als bevorzugte gegebenenfalls mit zuverwendenden Komponente d) werden ein oder mehrere aliphatische oder aromatische Alkohole als weitere Aufbaukomponenten mit eingesetzt. Bevorzugt sind dabei beispielsweise Methanol, Ethanol, Propanol, Ethandiol, Diethanolamin, Glycerin, Triethanolamin und Phenol.

Besonders bevorzugt sind Ethanol, Ethandiol, Diethanolamain, Glycerin, Triethanolamin und Phenol.

Bevorzugt beträgt die Menge an Säuregruppen 10 bis 90 mol%, bezogen auf die Summe der Stoffmenge an eingesetztem Mono-Aldehyd a) und ggf. eingesetztem Dialdehyd c).

Bevorzugt ist es, die Komponenten a) bis c) in folgendem Mengenverhältnis einzusetzen:
a) 2 bis 95 Gew.-%, ,
b) 2 bis 95 Gew.-% und
c) 0 bis 95 Gew.-%,
wobei die Prozentzahlen von a) bis c) sich zu 100 % ergänzen.

Die erfindungsgemäßen Verbindungen weisen vorzugsweise ein mittleres Molekulargewicht von 300 bis 50.000 g/mol auf, insbesondere von 1.000 bis 15.000 g/mol, und weisen vorzugsweise eine rückstandslose Wasserlöslichkeit oder Wasseremulgierbarkeit bei 20°C von mehr als 50 g/l auf.

Die Kondensate können als Feststoffe beispielsweise als Pulver oder Granulat oder als wässrige Lösungen oder Dispersionen eingesetzt werden.

Die Erfindung betrifft weiterhin ein Verfahren zur Herstellung der erfindungsgemäßen Verbindungen, dadurch gekennzeichnet, dass man die Komponenten a) und b) sowie gegebenenfalls weitere Komponente kondensiert und vor, während oder nach der Kondensation die Umsetzung mit Säuregruppen-einführenden Reaktanden erfolgt.

Die Kondensation kann beispielsweise unter Verwendung von basischen oder sauren Katalysatoren oder komplett ohne Katalysatoren erfolgen.

Die Kondensationsreaktion kann in wässriger Lösung bei Temperaturen von 20°C bis 200°C im basischen oder sauren Milieu erfolgen. Die Reihenfolge der Reaktandenzugabe, sowie die Reaktionsführung haben dabei selbstverständlich Einfluss auf die Eigenschaften des resultierenden Produktes, wie zum Beispiel auf das Molekulargewicht.

Die Einführung von Sulfonsäuregruppen kann vor, während oder nach der Kondensation erfolgen beispielsweise durch
1) Umsetzung mit konzentrierter Schwefelsäure oder
2) Umsetzung mit Oleum oder
3) Umsetzung von Chlorsulfonsäure oder
4) Umsetzung mit Alkali-, Erdalkali- oder Ammoniumdisulfiten oder
5) Umsetzung mit Alkali-, Erdalkali- oder Ammoniumhydrogensulfiten oder
6) Umsetzung mit Alkali-, Erdalkali- oder Ammoniumsulfamaten oder
einer Mischung der obigen Sulfonierungsmöglichkeiten 1) bis 6).

In einer bevorzugten Ausführungsform erfolgt die Einführung von Sulfonsäuregruppen durch Reaktion mit Natriumdisulfit derart, dass Natriumdisulfit mit einem Teil der Aldehyd-Komponenten (a) und gegebenenfalls (c), sowie der Amin- oder Amid-Komponente (b) in wässrigem Milieu bei Temperaturen von 20 bis 200°C, bevorzugt bei 20 bis 150°C, besonders bevorzugt beginnend bei 20-50°C und endend bei 70 bis 140°C zur Reaktion gebracht wird. Nach Umsetzung wird vorzugsweise mit weiteren Aldehyd-Komponenten (a) und gegebenenfalls (c) bei Temperaturen von 20 bis 200°C, bevorzugt 60 bis 200°C, besonders bevorzugt 70 bis 140°C umgesetzt.

Die Erfindung betrifft weiterhin die Verwendung von Säuregruppen-enthaltenen Kondensationsprodukten auf Basis von
a) wenigstens einem Mono-Aldehyd aus der Gruppe bestehend aus C₂-C₁₂-Mono-Aldehyden, wobei Formaldehyd als Reaktand für die Kondensationsprodukte nicht in Frage kommt
b) wenigstens einer NH₂-Gruppe tragenden Verbindung,
wobei als Säuregruppe Sulfon- und/oder Carbonsäuregruppen sowie deren Salze verstanden werden zum Gerben von Häuten oder Fellen oder zum Nachgerben von mineralisch angegerbtem Leder in wässriger Flotte.

"Auf Basis von" bedeutet, dass das Kondensationsprodukt gegebenenfalls aus weiteren Reaktanden neben a), b) und gegebenenfalls c) und d) und Säuregruppen-einführenden Reaktanden hergestellt wird.

Die jeweiligen Gruppen a) und b) sind für die erfindungsgemäße Verwendung jedoch abschließend hinsichtlich der verwendeten Mono-Aldehyden bzw. NH₂-Gruppen tragenden Verbindungen. Das heißt kein anderes Mono-Aldehyd wird als Aufkomponente eingesetzt, soweit es nicht der Definition von a) genügt. Zur Klarstellung sei erwähnt, dass beispielsweise Formaldehyd - da C₁-Mono-Aldehyd - als Reaktand für die erfindungsgemäßen Kondensate nicht in Frage kommt. Bevorzugte erfindungsgemäße Kondensationsprodukte werden zu mehr als 95 Gew.-%, insbesondere zu mehr als 99 Gew.-% aus den Komponenten a), b), c), d) und Reaktanden zur Einführung der Säuregruppen aufgebaut.

Als Mono-Aldehyde der Komponente a) kommen für die erfindungsgemäße Verwendung sowohl aliphatische als auch aromatische Aldehyde in Frage. Bevorzugt sind aliphatische, insbesondere C₂-C₇-Monoaldehyde. Besonders bevorzugt wird als ein Mono-Aldehyd der Komponente a) ein oder mehrere Verbindungen aus der Gruppe Acetaldehyd, Acrolein, Propionaldehyd, Butyraldehyd, Isobutyraldehyd, Crotonaldehyd, Pentanaldehyd, Hexanaldehyd und Heptanaldehyd, sowie Isomeren eingesetzt.

Besonders bevorzugt ist Isobutyraldeyhd.

Als NH₂-Gruppen enthaltene Verbindungen der Komponente b) kommen für die erfindungsgemäße Verwendung insbesondere primäre Amine sowie Amide in Frage. Bevorzugt sind dies aliphatische oder aromatische C₁-C₁₀-Amine und/oder -Amide. Besonders bevorzugt wird Cyanamid, Harnstoff, Melamin, Guanidin, Formoguanamin, Benzoguanamin, Acetoguanamin, Caprinoguanamin, Isobutyroguanamin, Acrylamid, Benzamid, Dicyandiamid (Cyanoguanidin) oder Mischungen daraus eingesetzt.

Bevorzugt wird Melamin in Kombination mit Harnstoff eingesetzt. Die erfindungsgemäß verwendeten Kondensationsprodukte tragen Sulfonsäure- und/oder Carbonsäuregruppen oder deren Salze.

Bevorzugte Salze sind Alkali-, Erdalkali- oder Ammoniumsalze, besonders bevorzugt in Form ihrer Natrium- oder Kalium-Salze.

Bevorzugte Säuregruppen sind Sulfonsäuregruppen und ihre Salze.

Als Reaktanden zur Beinführung der Säuregruppen insbesondere der Sulfonsäuregruppen kommen für die erfindungsgemäße Verwendung beispielsweise konzentrierte Schwefelsäure, Oleum, Chlorsulfonsäure, Alkali-, Erdalkali- oder Ammoniumdisulfit, Alkali-, Erdalkali- oder Ammoniumhydrogensulfit, Alkali-, Erdalkali- oder Ammoniumsulfamat oder Mischungen dieser Reaktanden in Frage.

Im übrigen gelten die Vorzugsformen der erfindungsgemäßen Kondensationsprodukte auch für die erfindungsgemäße Verwendung.

Zur Einführung der Carbonsäuregruppen kommen für die erfindungsgemäße Verwendung beispielsweise Oxidationen von Alkylgruppen, Alkengruppen, Aldehydgruppen oder Alkoholgruppen, die Hydrolyse von Amiden, Estern oder Carbonsäurechloriden, der Einbau von Carbonsäure-tragenden Verbindungen oder der Einbau von Carbonsäurechlorid-tragenden, Estertragenden oder Amid-tragenden Verbindungen und deren nachfolgende Hydrolyse in Frage.

Ebenfalls Gegenstand der Erfindung sind Leder oder Pelze, welche mit den erfindungsgemäß verwendeten Verbindungen gegerbt oder nachgegerbt werden.

Der Einsatz von Gerb-/Nachgerbstoffen ist dem Fachmann bekannt und wird unter anderem auch beschrieben in Herfeld (Herausgeber) "Bibliothek des Leders", Bd. 3, S. 306-314, Beispiele 10-16, Umschau-Verlag.

In einer bevorzugten Verwendung werden die erfindungsgemäßen Leder oder Pelze hergestellt, indem man in einer handelsüblichen Gerbapparatur wie Gerbfass, Mixer oder Dosamat handelsübliche Wet Blue auf einen pH-Wert von 4,0 bis 6,5, bevorzugt 4,8 bis 5,5 einstellt und anschließend in wässriger Flotte mit 3-20 % des erfindungsgemäßen Nachgerbstoffes allein oder in Kombination mit weiteren Nachgerbmitteln/Farbstoffen/Fettungsmitteln nachgerbt. Das so behandelte Leder kann betriebsüblich weiter verarbeitet werden.

Leder, welche mit dem erfindungsgemäßen Stoff gegerbt oder nachgegerbt werden, weisen neben einer Weichheit eine besondere Fülle auf. Daneben führt der erfindungsgemäße Stoff zu einer verbesserten Färbbarkeit.

Der erfindungsgemäße Stoff kann selbstverständlich auch in Verbindung mit weiteren Zusatzstoffen zur Anwendung kommen. Als solche kommen beispielsweise Neutralisationsmittel, Puffer, Dispergatoren, Entschäumer, Fette, Hydrophobiermittel, Färbereihilfsmittel oder andere Gerb-/Nachgerbstoffe in Frage.

Die Erfindung betrifft weiter die Verwendung des erfindungsgemäßen Stoffes als Hilfsmittel für die Papier- oder Textilanwendung.

Im Rahmen dieser Erfindung gelten auch alle Kombinationen der oben offenbarten allgemeinen Bereiche und der Vorzugsbereiche sowie der Vorzugsbereiche untereinander als offenbarte Vorzugsbereiche.

### Beispiele

### Beispiel 1:

540 g Wasser wurden bei RT vorgelegt und mit 184 g Isobutyraldehyd (2,55 mol) versetzt. Anschließend wurden portionsweise 375 g Natriumdisulfit eingetragen, wobei die Temperatur bis auf 68°C stieg. Nach Zugabe von 120 g Melamin wurde 15 min. bei 50°C nachgerührt. Nach Erwärmen auf 95°C wurde während zwei Stunden 187 g Isobutyraldehyd (2,59 mol) zugegeben. Nach Zugabe von 5 g Methansulfonsäure wurde 12 Stunden bei 95°C gerührt (exotherme Reaktion). Am Rotationsverdampfer wurde bis zur Trockene eingeengt und bei 100°C getrocknet.

### Beispiel 2:

800 g Wasser wurden bei Raumtemperatur vorgelegt und mit 399,2 g Natriumdisulfit versetzt. Es folgte bei 30°C beginnend eine Zugabe von 97,4 g Isobutyraldehyd (1,05 mol). Die Temperatur stieg hierbei bis 55°C. Nach Zugabe von 94,6 g Melamin und 22,5 g Harnstoff wurde auf 95°C erwärmt und während 30 Minuten erfolgte die Zugabe von 410,0 g wässriger, 50 Gew.-%iger Glutardialdehyd-Lösung (2,05 mol). Bei 94-98°C wurde 10 h nachgerührt. Es wurde bis zur Trockene eingeengt und bei 100°C getrocknet.

### Beispiel 3:

840 g Wasser wurden bei Raumtemperatur vorgelegt und mit 399,2 g Natriumdisulfit versetzt. Es folgte bei 30°C beginnend eine Zugabe von 194,7 g Isobutyraldehyd (2,7 mol). Die Temperatur stieg hierbei bis 64°C. Nach Zugabe von 126,1 g Melamin (1 mol) und 62,1 g Ethandiol (1 mol) wurde 5 Minuten bei 55°C nachgerührt. Es wurde auf 95°C erwärmt und während 30 Minuten erfolgte während einer Stunde die Zugabe von 197,6 g Isobutyraldehyd (2,74 mol) und 10 g Methansulfonsäure. Bei 95-98°C wird 6 h nachgerührt. Am Rotationsverdampfer wurde bis zur Trockene eingeengt und bei 100°C getrocknet.

### Beispiel 4:

840 g Wasser wurden bei Raumtemperatur vorgelegt und mit 399,2 g Natriumdisulfit versetzt. Es folgte bei 30°C beginnend eine Zugabe von 194,7 g Isobutyraldehyd (2,7 mol). Die Temperatur stieg hierbei bis 65°C. Nach Zugabe von 126,1 g Melamin (1 mol) und 94,1 g Phenol (1 mol) wurde 15 Minuten bei 65°C nachgerührt. Es wurde auf 95°C erwärmt und während 30 Minuten erfolgt die Zugabe von 197,6 g Isobutyraldehyd (2,74 mol) und 10 g Methansulfonsäure. Bei 95-98°C wurde 6 h nachgerührt. Am Rotationsverdampfer wurde bis zur Trockene eingeengt und bei 100°C getrocknet. Das Produkt wurde schließlich in einem Trockenmischer mit 20 Gewichtsprozent Ligninsulfonat, 10 Gewichtsprozent eines wasserlöslichen Naphthalinsulfonsäure-Formaldehyd-Kondensates basierend auf 128 Teilen Naphthalin und 20 Teilen Formaldehyd sowie 30 Gewichtsprozent Natriumsulfat vermengt (jeweils bezogen auf das Produkt nach Trocknen am Rotationsverdampfer).

### Beispiel 5:

400 g Wasser wurden bei Raumtemperatur vorgelegt und mit 375 g Natriumdisulfit versetzt. Es folgte bei 30°C beginnend eine Zugabe von 74,9 g Acetaldehyd (1,7 mol) gelöste in 100 g Wasser. Die Temperatur stieg hierbei bis auf 68°C. Nach Zugabe von 120 g Melamin wurde 15 Minuten bei 70°C nachgerührt. Es wurde auf 95°C erwärmt und während 30 Minuten erfolgt die Zugabe von 76 g Acetaldehyd (1,725 mol) gelöst in 100 g Wasser. Nach einer Stunde bei 98°C resultierte eine klare Lösung. Bei 95-98°C wurde weitere 3 Stunden nachgerührt. Die Mischung wird durch Sprühtrocknung in einen Feststoff überführt.

### Beispiel 6:

375 g Wasser wurden bei Raumtemperatur vorgelegt und mit 375 g Natriumdisulfit versetzt. Es folgt bei 30°C beginnend während 30 Minuten eine Zugabe von 98,7 g Propionaldehyd (1,7 mol) gelöst in 100 g Wasser. Die Temperatur stieg hierbei bis auf 54°C. Nach Zugabe von 120 g Melamin wurde 15 Minuten bei 55°C nachgerührt. Es wurde auf 95°C erwärmt und während 60 Minuten erfolgte die Zugabe von 100,2 g Propionaldehyd (1,725 mol) gelöst in 100 g Wasser. Nach 1,5 Stunden bei 95-98°C resultierte eine klare Lösung. Am Rotationsverdampfer wurde bis zur Trockene eingeengt und bei 100°C getrocknet.

### Beispiel 7:

840 g Wasser wurden bei Raumtemperatur vorgelegt und mit 399 g Natriumdisulfit (2,1 mol) versetzt. Es folgt bei 30°C beginnend während 30 Minuten eine Zugabe von 194,7 g Isobutyraldehyd (2,7 mol). Die Temperatur stieg hierbei bis auf 65°C. Nach Zugabe von 126,1 g Melamin (1 mol) und 94,1 g Phenol (1 mol) wurde 15 Minuten bei 65°C nachgerührt. Es wurde auf 95°C erwärmt und während 30 Minuten erfolgte die Zugabe von 197,6 g Isobutyraldehyd (2,74 mol) und 10 g Methansulfonsäure. Nach 10 Stunden bei 95- 98°C resultierte eine klare Lösung. Es wurden 475,9 g Natriumsulfat gelöst in 800 g Wasser während 15 Minuten zugegeben. Am Rotationsverdampfer wurde bis zur Trockene eingeengt und bei im Vakuum bei 100°C getrocknet.

### Beispiel 8:

800 g Wasser wurden bei Raumtemperatur vorgelegt und mit 399 g Natriumdisulfit (2,1 mol) versetzt. Es folgt bei 30°C beginnend während 30 Minuten eine Zugabe von 195 g Isobutyraldehyd (2,7 mol). Die Temperatur stieg hierbei bis auf 55 °C. Nach Zugabe von 126,1 g Melamin (1 mol) wurde auf 95°C erwärmt und während 30 Minuten erfolgte die Zugabe von 199 g wässriger, 40 gewichts-%-iger Glyoxal-Lösung (1,37 mol). Es wurde 6 h bei 94-98 °C nachgerührt. Nach Zugabe von 5 g Methansulfonsäure wurde weitere 6 h bei 94-98 °C nachgerührt. Es wurden 475,9 g Natriumsulfat gelöst in 500 g Wasser während 15 Minuten zugegeben. Am Rotationsverdampfer wurde bis zur Trockene eingeengt und bei im Vakuum bei 100°C getrocknet.

### Vergleichsbeispiel 1: Vergleichsprodukt aus EP-A-063319 (Beispiel 1)

92 Teile einer 65 %igen wässrigen Lösung eines Kondensationsproduktes aus 34 Teilen Harnstoff, 30 Teilen Formaldehyd und 15 Teilen Melamin (Viskosität: 85 sec. Fordbecher 4 mm bei 20°C) werden in 50 Teilen Wasser mit 52 Teilen Natriumhydrogensulfit und 30 Teilen Harnstoff 2 h bei 90°C gerührt. Anschließend werden 50 Teile 30 %ige Formaldehyd-Lösung zugetropft, mit 40 Teilen Wasser verdünnt und 5 h bei 90°C gerührt.

### Vergleichsbeispiel 2: Handelsüblicher Harzgerbstoff

680 Teile Formalin (30 %ig) werden mit 96 Teilen Wasser verdünnt und bei 50°C mit 100 Teilen Natriumdisulfit versetzt. Man gibt 32 Teile Melamin zu, rührt für 15 min und erhitzt mit 69 Teilen Formalin auf 95°C. Nach 2 h Rühren bei 95°C wird mit 400 Teilen Wasser verdünnt, 120 Teile Natriumsulfat zugegeben und die Mischung durch Sprühtrocknung in einen Feststoff überführt.

### Anwendungsbeispiel 1: Nachgerbung Modellrezeptur

Wet Blue (Rind, 100 g) wird im Fass mit 100 % Wasser (Prozentangaben immer bezogen auf das Wet Blue-Gewicht), 1 % Natriumformiat und 0,8 % Natriumbicarbonat über Nacht bei 40°C bewegt. Nach Ablassen der Flotte und Spülen wird im Fass mit 100 % Wasser und 5 % des Gerbstoffes gemäß Beispiel 1 (die Prozentangabe bezieht sich auf den Feststoffgehalt) bei 40°C 2 Stunden bewegt. Schließlich werden die Leder mit 300 % Wasser, 0,5 % Farbstoff und 10 % einer handelsüblichen Fettmischung 90 Minuten bei 50°C im Fass bewegt. Nach Zugabe von 2,5 % Ameisensäure (85 %ig) und weiterer Behandlung im Fass für 15 Minuten wird gespült, ausgestoßen und hängegetrocknet.

Man erhält ein Leder, das in Weichheit und Fülle dem mit den Vergleichsprodukten aus den Vergleichsbeispielen 1 und 2 erhaltenen deutlich überlegen ist. Das Leder ist darüber hinaus deutlich intensiver gefärbt als vergleichbare Leder, die mit Vergleichsbeispiel 2 behandelt wurde.

Die erhaltenen Leder wurden gemäß der Prüfvorschrift DIN 53315 "Nachweis von freiem Formaldehyd in Leder" untersucht. In dem mit dem Vergleichsprodukt 1 hergestellten Leder fanden sich 241 ppm Formaldehyd, mit Vergleichprodukt 2 fanden sich 146 ppm. In dem mit dem erfindungsgemäßen Produkt hergestellten Leder konnte kein Formaldehyd nachgewiesen werden.

### Anwendungsbeispiel 2: Nachgerbung für Möbelleder

Rohware: Wet Blue, Rind, Falzstärke 1,2 mm, Gewicht 6,8 kg. Mengenangaben beziehen sich auf Falzgewicht.

| | | **%** | **Produkt** | | **Zeit min** | **Bemerkung** |
|---|---|---|---|---|---|---|
| **Waschen** | | 200 | Wasser 40°C | | | |
| | | 0.2 | Ameisensäure 85% | 1:10 | 15 | pH 3.6 |
| | | | | | | Flotte ab |
| **Neutralisation** | | 100 | Wasser 35°C | | | |
| | | 3.0 | Chromsyntan | | | |
| | | 2.0 | Neutralisationsgerbstoff | | 15 | |
| | + | 1.3 | Natriumbicarbonat | | 90 | pH 5.7 |
| | | | | | | Flotte ab |
| **Waschen** | | 200 | Wasser 35°C | | 10 | |
| | | | | | | Flotte ab |
| **Färbung** | | 50 | Wasser 35°C | | | |
| | | 4.0 | **Produkt aus Beispiel 2** | | | |
| | | 2.0 | Farbstoff Rot | | | |
| | | 3.0 | Farbstoff Dunkelbraun | | 60 | Penetrationstest |
| | + | 50 | Wasser 60°C | | 5 | |
| | | | | | | |
| **Nachgerbung/** | + | 14,0 | Fettungsmittel | 1:2 | 60 | |
| **Fettung** | + | 50 | Wasser 60°C | | 5 | |
| | + | 1.5 | Ameisensäure 85% | 1:10 | 30 | pH 3.8 |
| | | | | | | Flotte ab |
| **Top-Färbung** | | 100 | Wasser 50°C | | | |
| | | 0,7 | Farbstoff Rot | | | |
| | | 0,3 | Farbstoff Dunkelbraun | 1:20 | 20 | |
| | + | 1,0 | Ameisensäure | | 20 | |
| | | | | | | Flotte ab |
| **Waschen** | | 200 | Wasser 20°C | | 10 | |
| | | | | | | Flotte ab |

Leder auf Bock, ausrecken, naß spannen, klimatisieren, stollen, millen über Nacht.

Das erhaltene Bordeaux-farbene Leder zeichnet sich durch besondere Weichheit und gleichmäßiges Millbild aus. Die losnarbigen, leeren Bereiche an Hals und Flämen sind deutlich kleiner als bei einem analog ohne das erfindungsgemäße Produkt hergestellten Leder. Bei einer Kontrollmessung gemäß DIN 53315 konnte kein Formaldehyd nachgewiesen werden.

### Anwendungsbeispiel 3: Nachgerbung für Schuhoberleder

Rohware: Wet Blue, Rind, Falzstärke 1,8 mm; Mengenangaben beziehen sich auf Falzgewicht.

| **%** | **Produkt** | | **Zeit min** | **Bemerkungen** |
|---|---|---|---|---|
| 200 | Wasser 40°C | | | |
| 0,2 | Ameisensäure | 1:10 | 10 | PH: 3,5 |
| | | | | ablassen |
| 100 | Water 40°C | | | |
| 2,0 | Neutralisationsgerbstoff | | | |
| 1,0 | Natriumformiat | | | |
| 0,8 | Natriumbicarbonat | | | |
| 3,0 | Synthetischer Gerbstoff | | 30 | PH: 5,3 |
| 2,0 | Hydrophobierendes Fettungsmittel | | | |
| 1,0 | Silicon-Polymer | 1:4 | 90 | PH: 4,8 |
| | | | | ablassen |
| 200 | Wasser 30°C | | 10 | ablassen |
| | | | | |
| 50 | Wasser 30°C | | | |
| 4,0 | Polyacrylat-Nachgerbstoff | 1:4 | 30 | |
| 4,0 | Synthetischer Gerbstoff | | | |
| 3,0 | Kastanien-Gerbstoff | | | |
| 6,0 | **Produkt gemäß Beispiel** 4 | | | |
| 1,5 | Farbstoff Braun | | 30 | |
| 0,5 | Ammonium Bicarbonat | | 10 | |
| 5,0 | Hydrophobierendes Fettungsmittel | 1:3 | | |
| 3,5 | Silicon-Polymer | 1:3 | 90 | |
| | | | | |
| 100 | Wasser 50°C | | 5 | |
| 1,5 | Ameisensäure | 1:10 | 15 | |
| 1,5 | Ameisensäure | 1:10 | 45 | PH: 3,5 |
| | | | | ablassen |
| 250 | Wasser 50°C | | | |
| 0,3 | Farbstoff Braun | | | |
| 1,0 | Ameisensäure | 1:10 | 30 | PH: 3,5 |
| | | | | ablassen |
| 50 | Wasser 50°C | | | |
| 2,0 | Chromgerbstoff 33 % basisch | | 60 | PH: 3,2 |
| | | | | ablassen |
| | | | | |
| 300 | Wasser 50°C | | 10 | ablassen |

Leder auf Bock, Ausrecken, Vakuumtrocknung 2 min bei 60°C, Hängetrocknen, Stollen, Vakuumtrocknung 30 sec. bei 60 °C

Das erhaltene Leder zeichnet sich durch besondere Fülle und einen trockenen Griff aus. Es ist deutlich festnarbiger als ein analog ohne das erfindungsgemäße Produkt oder mit dem Produkt aus Vergleichsbeispiel 2 hergestelltes Leder. Bei einer Kontrollmessung gemäß DIN 53315 konnte kein Formaldehyd nachgewiesen werden.

Analog den Beispielen 2, 3, 7 bzw. 8 wurden die nachfolgenden Beispiele der Tabelle 1 durchgeführt.

**Tabelle 1: Angabe von Gewichtsprozenten ohne Berücksichtigung von Wasser und zugesetztem Natriumsulfat*:**

| **Beispiel** | **9** | **10** | **11** | **12** | **13** | **14** | **15** | **16** | **17** | **18** | **19** | **20** | **21** | **22** | **23** | **24** | **25** | **26** | **27** | **28** | **29** | **30** |
|---|---|---|---|---|---|---|---|---|---|---|---|---|---|---|---|---|---|---|---|---|---|---|
| Natriumdisulfit | 43 | 13 | 22 | 37 | 48 | 32 | 43 | 48 | 45 | 41 | 44 | 39 | 39 | 40 | 37 | 35 | 50 | 39 | 39 | 39 | 39 | 39 |
| **Komponente a)** | | | | | | | | | | | | | | | | | | | | | | |
| Isobutyraldehyd | 43 | 15 | 23 | 37 | 48 | 57 | 42 | 36 | 40 | 45 | 43 | 38 | 39 | 40 | 36 | 35 | 37 | 48 | | | | |
| Acetaldehyd | | | | | | | | | | | | | | | | | | | 48 | | | |
| Acrolein | | | | | | | | | | | | | | | | | | | | 48 | | |
| Crotonaldehyd | | | | | | | | | | | | | | | | | | | | | 47 | |
| n-Hexanaldehyd | | | | | | | | | | | | | | | | | | | | | | 38 |
| Komponente b) | | | | | | | | | | | | | | | | | | | | | | |
| Melamin | 14 | 70 | 55 | 26 | 4 | 11 | 14 | 15 | 14 | 13 | 7 | 12 | 12 | 13 | 12 | 11 | 12 | 12 | 12 | 12 | 13 | 22 |
| Harnstoff | | | | | | | | | | | 5 | | | | | | | | | | | |
| **Komponente d)** | | | | | | | | | | | | | | | | | | | | | | |
| Diethanolamin | | | | | | | | | | | | 10 | | | | | | | | | | |
| Glycerin | | | | | | | | | | | | | 9 | | | | | | | | | |
| Ethandiol | | | | | | | | | | | | | | 6 | | | | | | | | |
| Triethanolamin | | | | | | | | | | | | | | | 14 | | | | | | | |
| Herstellung analog: | ← Bsp. 2 → | | | | | | | | | | | ← Bsp. 3 | | | | → ← Bsp. 2 → | | | | | | |
| **Katalysator:** | | | | | | | | | | | | | | | | | | | | | | |
| Methansulfonsäure | | | | | | | 1 | 1 | 1 | 1 | 1 | 1 | 1 | 1 | 1 | 1 | 1 | 1 | 1 | 1 | 1 | 1 |
| **weitere Zusätze:** | | | | | | | | | | | | | | | | | | | | | | |
| Ligninsulfonat | | | | | | | | | | | | | | | | 18 | | | | | | |

**Tabelle 2: Angabe von Gewichtsprozenten ohne Berücksichtigung von Wasser und zugesetztem Natriumsulfat*:**

| **Beispiel** | **31** | **32** | **33** | **34** | **35** | **36** | **37** | **38** | **39** | **40** |
|---|---|---|---|---|---|---|---|---|---|---|
| **Natriumdisulfit** | 44 | 38 | 31 | 23 | 14 | 37 | 37 | 37 | 39 | 38 |
| **Komponente a)** | | | | | | | | | | |
| Isobutyraldehyd | 44 | 39 | 31 | 23 | 9 | 35 | 35 | 31 | 39 | 30 |
| **Komponente** b) | | | | | | | | | | |
| Melamin | 6 | 12 | 19 | 27 | 36 | 13 | 13 | 12 | 12 | 12 |
| **Komponente** c) | | | | | | | | | | |
| Glutardialdehyd | 5 | 10 | 18 | 26 | 40 | 14 | | 19 | | 10 |
| Glyoxal | | | | | | | | | | |
| Malonaldehyd | | | | | | | 14 | | | |
| **Komponente** d) | | | | | | | | | | |
| Phenol | | | | | | | | | 9 | 9 |
| Herstellung analog: | ← Bsp. 7 → | | | | | | | | | |
| **Katalysator:** | | | | | | | | | | |
| Methansulfonsäure | 1 | 1 | 1 | 1 | 1 | 1 | 1 | 1 | 1 | 1 |

**Tabelle 3: Angabe von Gewichtsprozenten ohne Berücksichtigung von Wasser und zugesetztem Natriumsulfat*:**

| Beispiel | **41** | **42** | **43** | **44** | **45** | **46** | **47** | **48** | **49** | **50** | **51** | **52** | **53** | **54** | **55** | **56** | **57** | **58** |
|---|---|---|---|---|---|---|---|---|---|---|---|---|---|---|---|---|---|---|
| Natriumdisulfit | 39 | 41 | 37 | 35 | 40 | 41 | 41 | 41 | 38 | 39 | 39 | 43 | 35 | 36 | 43 | 44 | 58 | 54 |
| **Komponente a)** | | | | | | | | | | | | | | | | | | |
| Propionaldehyd | | | | | | | | | | | | | | | | | | 29 |
| Isobutyraldehyd | 46 | 44 | 36 | 35 | 19 | 20 | 20 | 20 | 9 | 9 | 9 | 21 | 17 | 17 | 21 | 21 | | |
| Acetaldehyd | | | | | | | | | | | | | | | | | 23 | |
| **Komponente b)** | | | | | | | | | | | | | | | | | | |
| Melamin | 14 | 14 | 12 | 11 | 13 | 10 | 6 | 10 | 13 | 9 | | 14 | 11 | 8 | 10 | 7 | 19 | 17 |
| Harnstoff | | | | | | 2 | 5 | 2 | | 2 | 2 | | | 2 | 2 | 5 | | |
| Dicyandiamid | | | | | | | | | | | 9 | | | | | | | |
| Komponente c) | | | | | | | | | | | | | | | | | | |
| Glutardialdehyd | | | | | 27 | 27 | 28 | 27 | 39 | 40 | 40 | | | | | | | |
| Glyoxal | | | | | | | | | | | | 21 | 36 | 36 | 23 | 22 | | |
| Herstellung analog: | ← Bsp. 2 → | | | | ← Bsp. 8 → | | | | | | | | | | | | Bsp.2 | Bsp.2 |
| Katalysator: | | | | | | | | | | | | | | | | | | |
| Methansulfonsäure | 1 | 1 | 1 | 1 | 1 | | | | 1 | 1 | 1 | 1 | 1 | 1 | 1 | 1 | | |
| weitere Zusätze: | | | | | | | | | | | | | | | | | | |
| Ligninsulfonat | | | 14 | 18 | | | | | | | | | | | | | | |

| | | | | | | | | | | | | | | | | | | |
|---|---|---|---|---|---|---|---|---|---|---|---|---|---|---|---|---|---|---|
| * Die Versuche wurden in wässrigem Milieu durchgeführt, nähere Angaben dazu finden sich bei den Beispielen 1 bis 8, siehe oben. Ferner wurden die Versuche teilweise derart durchgeführt, dass nach Ende der Umsetzung Natriumsulfat zugegeben wurde, siehe Beispiele 7 und 8. Die tabellierten Beispiele wurden entsprechend durchgeführt. Die erfindungsgemäßen Kondensate lassen sich sowohl als wässrige Lösung, als auch nach Trocknung, eventuell Sprühtrocknung, einsetzen. Vor einer Trocknung können sie mit Hilfsmitteln, wie beispielsweise Neutralsalzen, Neutralisationsmitteln, Puffern, Dispergatoren, Entschäumern, Fetten, Hydrophobiermitteln, Färbereihilfsmitteln oder andere Gerb-/Nachgerbstoffen vermischt werden. | | | | | | | | | | | | | | | | | | |

## Patentansprüche

1. Säuregruppen-enthaltene Kondensationsprodukte auf Basis von
a) wenigstens einem Mono-Aldehyd aus der Gruppe bestehend aus Acrolein, Propionaldehyd, Isobutyraldehyd, Crotonaldehyd, Pentanaldehyd, Hexanaldehyd, Heptanaldehyd und deren Isomeren, insbesondere Isobutyraldehyd, wobei Formaldehyd als Reaktand für die Kondensationsprodukte nicht in Frage kommt, und
b) wenigstens einer NH₂-Gruppe tragenden Verbindung
wobei als Säuregruppe Sulfon- und/oder Carbonsäuregruppen sowie deren Salze verstanden werden, wobei die Einführung von Sulfonsäuregruppen mit Hilfe von Reaktanden ausgewählt aus der Gruppe bestehend aus konzentrierter Schwefelsäure, Oleum, Chlorsulfonsäure, Alkali-, Erdalkali- oder Ammoniumdisulfit, Alkali-, Erdalkali- oder Ammoniumhydrogensulfit, Alkali-, Erdalkali- oder Ammoniumsulfamat und Mischungen davon erfolgt und die Einführung von Carbonsäuregruppen durch Oxidation von Alkylgruppen, Alkylengruppen, Aldehydgruppen oder Alkoholgruppen, die Hydrolyse von Amiden, Estern oder Carbonsäurechloriden erfolgt.

2. Kondensate gemäß Anspruch 1, **dadurch gekennzeichnet, dass** als NH₂-Gruppen enthaltene Verbindungen der Komponente b) primäre Amide und/oder Amide, insbesondere aliphatische oder aromatische C₁-C₁₀-Amine und/der -Amide, insbesondere Cyanamid, Harnstoff, Melamin, Guanidin, Formoguanamin, Benzoguanamin, Acetoguanamin, Caprinoguanamin, Isobutyroguanamin, Acrylamid, Benzamid, Dicyandiamid (Cyanoguanidin) oder Mischungen daraus eingesetzt werden.

3. Kondensate gemäß wenigstens einem der vorangegangenen Ansprüche, **dadurch gekennzeichnet, dass** als Salze der Säuregruppen Alkali-, Erdalkali- oder Ammoniumsalze, insbesondere Natrium- oder Kaliumsalze eingesetzt werden.

4. Kondensate gemäß wenigstens einem der vorangegangenen Ansprüche, **dadurch gekennzeichnet, dass** als weitere Aufbaukomponente die Komponente c) ein oder mehrere vorzugsweise aliphatische oder aromatische Dialdehyde, insbesondere C₂-C₁₂-, besonders bevorzugt C₂-C₇-Dialdehyde eingesetzt werden.

5. Kondensate gemäß wenigstens einem der vorangegangenen Ansprüche, **dadurch gekennzeichnet, dass** als weitere Aufbaukomponente die Komponente c) ein oder mehrere Verbindungen aus der Gruppe Glyoxal, Malonaldehyd, Butandial, Pentandial, Hexandial und Heptandial, und deren sämtliche Isomere eingesetzt werden, besonders bevorzugt ist Glutardialdehyd.

6. Kondensate gemäß wenigstens einem der vorangegangenen Ansprüche, **dadurch gekennzeichnet, dass** als weitere Aufbaukomponente als Komponente d) ein oder mehrere aromatische oder aliphatische Alkohole eingesetzt werden.

7. Kondensate gemäß wenigstens einem der vorangegangenen Ansprüche, **dadurch gekennzeichnet, dass** als weitere Aufbaukomponente als Komponente d) ein oder mehrere Verbindungen aus der Gruppe Methanol, Ethanol, Propanol, Ethandiol, Diethanolamin, Glycerin, Triethanolamin und Phenol eingesetzt werden.

8. Verfahren zur Herstellung von Kondensaten gemäß wenigstens einem der vorangegangenen Ansprüche, **dadurch gekennzeichnet, dass** man die Komponenten a) und b) sowie gegebenenfalls weitere Komponenten kondensiert und vor, während oder nach der Kondensation die Umsetzung mit Säuregruppen-einführenden Reaktanden erfolgt.

9. Verwendung von Säuregruppen-enthaltenen Kondensationsprodukten auf Basis von
a) wenigstens einem Mono-Aldehyd aus der Gruppe bestehend aus C₂-C₁₂-Mono-Aldehyden, wobei Formaldehyd als Reaktand für die Kondensationsprodukte nicht in Frage kommt, und
b) wenigstens einer NH₂-Gruppe tragenden Verbindung
wobei als Säuregruppe Sulfon- und/oder Carbonsäuregruppen sowie deren Salze verstanden werden, zum Gerben von Häuten oder Fellen oder zum Nachgerben von mineralisch gegerbtem Leder in wässriger Flotte.

10. Verwendung gemäß Anspruch 9, **dadurch gekennzeichnet, dass** als Mono-Aldehyde der Komponente a) aliphatische Mono-Aldehyde, vorzugsweise C₂-C₇-Mono-Aldehyde eingesetzt werden.

11. Verwendung gemäß Anspruch 9 oder 10, **dadurch gekennzeichnet, dass** Mono-Aldehyde der Komponente a) eine oder mehrere Verbindungen aus der Gruppe Acetaldehyd, Acrolein, Propionaldehyd, Butyraldehyd, Isobutyraldehyd, Crotonaldehyd, Pentanaldehyd, Hexanaldehyd, Heptanaldehyd und deren Isomere, insbesondere Isobutyraldehyd eingesetzt werden.

12. Verwendung gemäß einem der Ansprüche 9 bis 11, **dadurch gekennzeichnet, dass** als NH₂-Gruppen enthaltene Verbindungen der Komponente b) primäre Amide und/oder Amide, insbesondere aliphatische oder aromatische C₁-C₁₀-Amine und/der -Amide, insbesondere Cyanamid, Harnstoff, Melamin, Guanidin, Formoguanamin, Benzoguanamin, Acetoguanamin, Caprinoguanamin, Isobutyrguanamin, Acrylamid, Benzamid, Dicyandiamid (Cyanoguanidin) oder Mischungen daraus eingesetzt werden.

13. Verwendung gemäß einem der Ansprüche 9 bis 12**dadurch gekennzeichnet, dass** als Salze der Säuregruppen Alkali-, Erdalkali- oder Ammoniumsalze, insbesondere Natrium- oder Kaliumsalze eingesetzt werden.

14. Verwendung gemäß einem der Ansprüche 9 bis 13, **dadurch gekennzeichnet, dass** als weitere Aufbaukomponente die Komponente c) ein oder mehrere vorzugsweise aliphatische oder aromatische Dialdehyde, insbesondere C₂-C₁₂-, besonders bevorzugt C₂-C₇-Dialdehyde eingesetzt werden.

15. Verwendung gemäß einem der Ansprüche 9 bis 14, **dadurch gekennzeichnet, dass** als weitere Aufbaukomponente die Komponente c) ein oder mehrere Verbindungen aus der Gruppe Glyoxal, Malonaldehyd, Butandial, Pentandial, Hexandial und Heptandial, und deren sämtliche Isomere eingesetzt werden, besonders bevorzugt ist Glutardialdehyd.

16. Verwendung gemäß einem der Ansprüche 9 bis 15, **dadurch gekennzeichnet, dass** als weitere Aufbaukomponente als Komponente d) ein oder mehrere aromatische oder aliphatische Alkohole eingesetzt werden.

17. Verwendung gemäß einem der Ansprüche 9 bis 16, **dadurch gekennzeichnet, dass** als weitere Aufbaukomponente als Komponente d) ein oder mehrere Verbindungen aus der Gruppe Methanol, Ethanol, Propanol, Ethandiol, Diethanolamin, Glycerin, Triethanolamin und Phenol eingesetzt werden.

18. Leder oder Pelze gegerbt oder nachgegerbt mit wenigstens einem Kondensat wie in wenigstens einem der Ansprüche 9 bis 17 definiert.

## Claims

1. Condensates containing acid groups and based on
a) at least one monoaldehyde from the group consisting of acrolein, propionaldehyde, isobutyraldehyde, crotonaldehyde, pentanaldehyde, hexanaldehyde, heptanaldehyde and isomers thereof, in particular isobutyraldehyde, formaldehyde not being suitable as a reactant for the condensates, and
b) at least one compound carrying an NH₂ group,
acid group being understood as meaning sulpho and/or carboxyl groups and salts thereof, the introduction of sulpho groups being effected with the aid of reactants selected from the group consisting of concentrated sulphuric acid, oleum, chlorosulphonic acid, alkali metal, alkaline earth metal or ammonium disulphite, alkali metal, alkaline earth metal or ammonium hydrogen sulphite, alkali metal, alkaline earth metal or ammonium sulphamate and mixtures thereof, and the introduction of carboxyl groups being effected by Oxidation of alkyl groups, alkylene groups, aldehyde groups or alcohol groups, the hydrolysis of amides, esters or carboxylic acid chlorides.

2. Condensates according to Claim 1, **characterized in that** primary amines and/or amides, in particular aliphatic or aromatic C₁-C₁₀-amines and/or amides, in particular cyanamide, urea, melamine, guanidine, formoguanamine, benzoguanamine, acetoguanamine, caprinoguanamine, isobutyroguanamine, acrylamide, benzaldehyde, dicyandiamide (cyanoguanidine) or mixtures thereof are used as compounds of component b) which contain NH₂ groups.

3. Condensates according to at least one of the preceding claims, **characterized in that** alkali metal, alkaline earth metal or ammonium salts, in particular sodium or potassium salts, are used as salts of the acid groups.

4. Condensates according to at least one of the preceding claims, **characterized in that** of one or more preferably aliphatic or aromatic dialdehydes, in particular C₂-C₁₂-dialdehydes, in particular C₂-C₇-dialdehydes, are used as a further constituent of component c).

5. Condensates according to at least one of the preceding claims, **characterized in that** the one more compounds from the group consisting of glyoxal, malonaldehyde, butanedial, pentanedial, hexanedial and heptanedial, and all isomers thereof are used as a further constituent of component c), glutaraldehyde being particularly preferred.

6. Condensates according to at least one of the preceding claims, **characterized in that**, as a further constituent, one or more aromatic or aliphatic alcohols are used as component d).

7. Condensates according to at least one of the preceding claims, **characterized in that**, as a further constituent, one or more compounds from the group consisting of methanol, ethanol, propanol, ethanediol, diethanolamine, glycerol, triethanolamine and phenol are used as component d).

8. Process for the preparation of condensates according to at least one of the preceding claims, **characterized in that** the components a) and b) and optionally further components are condensed and the reaction with reactants introducing acid groups is effected before, during or after the condensation.

9. Use of condensates containing acid groups and based on
a) at least one monoaldehyde from the group consisting of C₂-C₁₂-monoaldehydes, formaldehyde not being suitable as a reactant for the condensates, and
b) at least one compound carrying an NH₂ group,
acid group being understood as meaning sulfo and/or carboxyl groups and salts thereof, for tanning hides or skins or for retanning mineral tanned leather in aqueous liquor.

10. Use according to Claim 9, **characterized in that** aliphatic monoaldehydes, preferably C₂-C₇-monoaldehydes, are used as monoaldehydes of component a).

11. Use according to Claim 9 or 10, **characterized in that** one or more compounds from the group consisting of acetaldehyde, acrolein, propionaldehyde, butyraldehyde, isobutyraldehyde, crotonaldehyde, pentanaldehyde, hexanaldehyde, heptanaldehyde and isomers thereof, in particular isobutyraldehyde, are used as monoaldehydes of component a).

12. Use according to any of Claims 9 to 11, **characterized in that** primary amines and/or amides, in particular aliphatic or aromatic C₁-C₁₀-amines and/or C₁-C₁₀-amides, in particular cyanamide, urea, melamine, guanidine, formoguanamine, benzoguanamine, acetoguanamine, caprinoguanamine, isobutyroguanamine, acrylamide, benzamide, dicyandiamide (cyanoguanidine) or mixtures thereof are used as compounds of component b) which contain NH₂ groups.

13. Use according to any of Claims 9 to 12, **characterized in that** alkali metal, alkaline earth metal or ammonium salts, in particular sodium or potassium salts, are used as salts of the acid groups.

14. Use according to any of Claims 9 to 13, **characterized in that** one or more preferably aliphatic or aromatic dialdehydes, in particular C₂-C₁₂-dialdehydes, particularly preferably C₂-C₇-dialdehydes are used as a further synthesis component, the component c).

15. Use according to any of Claims 9 to 14, **characterized in that** one or more compounds from the group consisting of glyoxal, malonaldehyde, butanedial, pentanedial, hexanedial and heptanedial and all isomers thereof are used as a further synthesis component, the component c), glutaraldehyde being particularly preferred.

16. Use according to any of Claims 9 to 15, **characterized in that** one or more aromatic or aliphatic alcohols are used as a further synthesis component, as component d).

17. Use according to any of Claims 9 to 16, **characterized in that** one or more compounds from the group consisting of methanol, ethanol, propanol, ethanediol, diethanolamine, glycerol, triethanolamine and phenol are used as a further synthesis component, as component d).

18. Leathers or furs tanned or retanned with at least one condensate as defined in at least one of Claims 9 to 17.

## Revendications

1. Produits de condensation contenant des groupes acides, à base de
a) au moins un monoaldéhyde choisi dans le groupe constitué par l'acroléine, le propionaldéhyde, l'isobutyraldéhyde, le crotonaldéhyde, le pentanaldéhyde, l'hexanaldéhyde, l'heptanaldéhyde et leurs isomères, en particulier l'isobutyraldéhyde, le formaldéhyde n'étant pas pris en considération comme partenaire réactionnel pour les produits de condensation, et
b) au moins un composé portant un groupe NH₂,
en entendant par groupe acide les groupes sulfo et/ou carboxy ainsi que leurs sels, l'introduction des groupes sulfo s'effectuant à l'aide de partenaires réactionnels choisis dans le groupe constitué par l'acide sulfurique concentré, l'oléum, l'acide chlorosulfonique, un disulfite de métal alcalin, de métal alcalino-terreux ou d'ammonium, un hydrogénosulfite de métal alcalin, de métal alcalino-terreux ou d'ammonium, un sulfamate de métal alcalin, de métal alcalino-terreux ou d'ammonium et des mélanges de ceux-ci, et l'introduction des groupes carboxy s'effectuant par oxydation de groupes alkyle, de groupes alkylène, de groupes aldéhyde ou de groupes alcool, l'hydrolyse d'amides, d'esters ou de chlorures de carbonyle.

2. Produits de condensation selon la revendication 1, **caractérisés en ce que** comme composés contenant des groupes NH₂ du composant b) on utilise des amides et/ou amines primaires, en particulier des amides et/ou amines aliphatiques ou aromatiques en C₁-C₁₀, en particulier le cyanamide, l'urée, la mélamine, la guanidine, la formoguanamine, la benzoguanamine, l'acétoguanamine, la caprinoguanamine, l'isobutyroguanamine, l'acrylamide, le benzamide, le dicyanodiamide (cyanoguanidine) ou des mélanges de ceux-ci.

3. Produits de condensation selon au moins l'une des revendications précédentes, **caractérisés en ce que** comme sels des groupes acides on utilise des sels alcalins, alcalino-terreux ou d'ammonium, en particulier les sels de sodium ou de potassium.

4. Produits de condensation selon au moins l'une des revendications précédentes, **caractérisés en ce que** comme autre composant de synthèse le composant c) on utilise un ou plusieurs dialdéhydes de préférence aliphatiques ou aromatiques, en particulier des dialdéhydes en C₂-C₁₂, de façon particulièrement préférée en C₂-C₇.

5. Produits de condensation selon au moins l'une des revendications précédentes, **caractérisés en ce que** comme autre composant de synthèse le composant c) on utilise un ou plusieurs composés choisis dans le groupe constitué par le glyoxal, le malonaldéhyde, le butanedial, le pentanedial, l'hexanedial et l'heptanedial, et tous leurs isomères, le glutaraldéhyde étant particulièrement préféré.

6. Produits de condensation selon au moins l'une des revendications précédentes, **caractérisés en ce que** comme autre composant de synthèse on utilise en tant que composant d) un ou plusieurs alcools aliphatiques ou aromatiques.

7. Produits de condensation selon au moins l'une des revendications précédentes, **caractérisés en ce que** comme autre composant de synthèse on utilise en tant que composant d) un ou plusieurs composés choisis dans le groupe constitué par le méthanol, l'éthanol, le propanol l'éthanediol, la diéthanolamine, le glycérol, la triéthanolamine et le phénol.

8. Procédé pour la préparation de produits de condensation selon au moins l'une des revendications précédentes, **caractérisé en ce qu'**on condense les composants a) et b) ainsi qu'éventuellement d'autres composants et avant, pendant ou après la condensation on effectue la réaction avec des partenaires réactionnels introduisant des groupes acides.

9. Utilisation de produits de condensation contenant des groupes acides, à base de
a) au moins un monoaldéhyde choisi dans le groupe constitué par les monoaldéhydes en C₂-C₁₂, le formaldéhyde n'étant pas pris en considération comme partenaire réactionnel pour les produits de condensation, et
b) au moins un composé portant un groupe NH₂,
en entendant par groupe acide les groupes sulfo et/ou carboxy ainsi que leurs sels, pour le cannage de peaux ou de fourrures ou pour le post-tannage de cuir à tannage minéral, en bain aqueux.

10. Utilisation selon la revendication 9, **caractérisée en ce que** comme monoaldéhydes du composant a) on utilise des monoaldéhydes aliphatiques, de préférence des monoaldéhydes en C₂-C₇.

11. Utilisation selon la revendication 9 ou 10, **caractérisée en ce que** comme monoaldéhydes du composant a) on utilise un ou plusieurs composés choisis dans le groupe constitué par l'acétaldéhyde, l'acroléine, le propionaldéhyde, le butyraldéhyde, l'isobutyraldéhyde, le crotonaldéhyde, le pentanaldéhyde, l'hexanaldéhyde, l'heptanaldéhyde et leurs isomères, en particulier l'isobutyraldéhyde.

12. Utilisation selon l'une quelconque des revendications 9 à 11, **caractérisée en ce que** comme composés comportant des groupes NH₂ du composant b) on utilise des amides et/ou amines primaires, en particulier des amides et/ou amines aliphatiques ou aromatiques en C₁-C₁₀, en particulier le cyanamide, l'urée, la mélamine, la guanidine, la formoguanamine, la benzoguanamine, l'acétoguanamine, la caprinoguanamine, l'isobutyroguanamine, l'acrylamide, le benzamide, le dicyanodiamide (cyanoguanidine) ou des mélanges de ceux-ci.

13. Utilisation selon l'une quelconque des revendications 9 à 12, **caractérisée en ce que** comme sels des groupes acides on utilise des sels alcalins, alcalino-terreux ou d'ammonium, en particulier les sels de sodium ou de potassium.

14. Utilisation selon l'une quelconque des revendications 9 à 13, **caractérisée en ce que** comme autre composant de synthèse le composant c) on utilise un ou plusieurs dialdéhydes de préférence aliphatiques ou aromatiques, en particulier des dialdéhydes en C₂-C₁₂, de façon particulièrement préférée en C₂-C₇.

15. Utilisation selon l'une quelconque des revendications 9 à 14, **caractérisée en ce que** comme autre composant de synthèse le composant c) on utilise un ou plusieurs composés choisis dans le groupe constitué par le glyoxal, le malonaldéhyde, le butanedial, le pentanedial, l'hexanedial et l'heptanedial, et tous leurs isomères, le glutaraldéhyde étant particulièrement préféré.

16. Utilisation selon l'une quelconque des revendications 9 à 15, **caractérisée en ce que** comme autre composant de synthèse on utilise en tant que composant d) un ou plusieurs alcools aliphatiques ou aromatiques.

17. Utilisation selon au l'une quelconque des revendications 9 à 16, **caractérisée en ce que** comme autre composant de synthèse on utilise en tant que composant d) un ou plusieurs composés choisis dans le groupe constitué par le méthanol, l'éthanol, le propanol l'éthanediol, la diéthanolamine, le glycérol, la triéthanolamine et le phénol.

18. Cuirs ou peaux tannés ou post-tannés à l'aide d'au moins un produit de condensation tel que défini dans au moins l'une des revendications 9 à 17.
